(19) Europäisches Patentamt
European Patent Office
Office européen des brevets

(11) **EP 1 616 163 B1**

(12) **EUROPÄISCHE PATENTSCHRIFT**

(45) Veröffentlichungstag und Bekanntmachung des Hinweises auf die Patenterteilung:
**10.01.2007  Patentblatt 2007/02**

(21) Anmeldenummer: **04704535.6**

(22) Anmeldetag: **23.01.2004**

(51) Int Cl.:
***G01M 13/04*** *(2006.01)*

(86) Internationale Anmeldenummer:
**PCT/DE2004/000095**

(87) Internationale Veröffentlichungsnummer:
**WO 2004/068100 (12.08.2004 Gazette 2004/33)**

(54) **VERFAHREN ZUR FESTSTELLUNG VON KÖRPERSCHALLEREIGNISSEN IN EINEM WÄLZLAGER**

METHOD FOR DETECTING STRUCTURE-BORNE NOISE EVENTS IN A ROLLER BEARING

PROCEDE DE DETECTION D'EVENEMENTS DE BRUIT DE STRUCTURE DANS UN PALIER A ROULEMENT

(84) Benannte Vertragsstaaten:
**AT BE BG CH CY CZ DE DK EE ES FI FR GB GR HU IE IT LI LU MC NL PT RO SE SI SK TR**

(30) Priorität: **31.01.2003  DE 10303877**

(43) Veröffentlichungstag der Anmeldung:
**18.01.2006  Patentblatt 2006/03**

(73) Patentinhaber: **Schaeffler KG**
**91074 Herzogenaurach (DE)**

(72) Erfinder: **PECHER, Alfred**
**97488 Stadtlauringen (DE)**

(56) Entgegenhaltungen:
**EP-A- 0 889 316          DE-A- 19 902 326**
**GB-A- 1 514 792          US-A- 5 602 761**

## Beschreibung

### Anwendungsgebiet der Erfindung

Die Erfindung betrifft ein Verfahren zur Feststellung von Körperschallereignissen in einem Wälzlager gemäß dem Oberbegriff des Anspruchs 1.

### Hintergrund der Erfindung

Aus der DE 199 43 689 A1 ist ein Verfahren und eine Vorrichtung zur Überwachung und/oder Diagnose sich bewegender Maschinen und/oder Maschinenteile bekannt. Ziel derartiger Mess- und Auswerteverfahren ist es, möglichst frühzeitig einen Schaden an einer Maschine oder einem Maschinenteil wie beispielsweise an einem Wälzlager zu erkennen, um dieses ggf. vor dessen Totalausfall austauschen zu können.

Bei diesem bekannten Verfahren werden von den Maschinen bzw. Maschinenteilen erzeugte Schwingungen und Körperschallwellen mit einem Beschleunigungssensor als breitbandiges Zeitsignal aufgenommen und einer Auswerteeinrichtung zugeleitet. In dieser Auswerteeinrichtung wird das Messsignal digitalisiert und ein größerer Umfang solcher Digitalwerte abgespeichert. In einem anschließenden Berechnungsvorgang werden diese Daten einer Frequenzanalyse mittels einer Fast-Fourier-Transformation unterzogen. Die Durchführung einer solchen Fast-Fourier-Transformation ist sehr aufwendig und erfordert vergleichsweise viel Rechenkapazität und Speicherplatz.

Darüber hinaus ist aus dieser Druckschrift bekannt, dass bei anderen Analyseverfahren das breitbandige Zeitsignal einer diskreten Filterung unterzogen wird.

Dabei werden aus dem Messsignal Frequenzanteile der durch die Schädigung hervorgerufenen Signalkomponenten herausgefiltert und ein Amplitudenverlauf dieses Anteils ausgewertet. Durch Änderungen der Frequenzen kann die Auswertung derart auf benachbarte Signalkomponenten ausgedehnt werden, dass lokale Amplitudenmaxima ermittelbar sind. Der Rechenaufwand für die Durchführung einer diskreten Filterung ist zwar gegenüber einer solchen konventionellen Fourier-Transformation reduziert, aber dennoch vergleichsweise groß, da die Eckfrequenzen des Filters dynamisch an unterschiedliche Drehzahlen des Welle-Lager-Systems angepasst werden müssen.

Schließlich ist aus der DE 101 36 438 A1 eine Sensoranordnung bekannt geworden, bei der in einer Umfangsnut eines feststehenden Wälzlagerringes Dehnungsmessstreifen angeordnet sind, die dort mit signalelektronischen Bausteinen verbunden sind, mit denen direkt in der Umfangsnut des Wälzlagerringes eine Signalauswertung stattfinden kann. Da diese Umfangsnut vergleichsweise klein ist, können die dort angeordneten signalelektronischen Bausteine nur über eine eher bescheidenen Speicher- und Rechenkapazität verfügen, so dass die oben beschriebenen Auswerteverfahren nicht vor Ort und sozusagen "online" stattfinden. Außerdem ist aus der GB 1 514 792 eine Vorrichtung zum Ermitteln von Beschädigungen auf Drehkörpern, z.B. Kugellagern, bekannt.

### Aufgabe der Erfindung

Vor diesem Hintergrund besteht die Aufgabe an die Erfindung darin, für eine beispielsweise in einem Wälzlager angeordnete Messvorrichtung ein Verfahren zur Feststellung von Körperschallwellen bzw. Körperschallereignissen vorzustellen, mit dem ohne großen Speicherplatzbedarf und ohne große Rechenkapazität direkt am Ort der Messsignalgewinnung die notwenigen Analyseschritte vollzogen werden können. Darüber hinaus soll das Messsignal von geeigneten Sensoren am Wälzlager derartig umgewandelt werden, dass besser als bisher eine eindeutige Aussage über das tatsächliche Vorliegen von Lagerschäden möglich ist. Schließlich soll dieses Verfahren so schnell durchführbar sein, dass vorzugsweise "online", dass heißt ohne Zeitverzug ein plötzlich auftretender Lagerschaden erfassbar ist.

### Zusammenfassung der Erfindung

Die Lösung dieser Aufgaben ergibt sich aus den Merkmalen des Hauptanspruchs, während vorteilhafte Ausgestaltungen und Weiterbildungen der Erfindung den Unteransprüchen entnehmbar sind.

Demnach ist verfahrensgemäß vorgesehen, dass zur Feststellung von Körperschallereignissen in einem Wälzlager das Messsignal eines an einem Wälzlager angeordneten druck- oder dehnungsempfindlichen Sensors zunächst einem Frequenzfilter zum Herausfiltern von unerwünschten Signalanteilen zugeführt wird. Anschießend wird aus den Digitalwerten des Frequenzfilterausgangsignals ein erster Varianzwert errechnet und aus zeitlich späteren Digitalwerten des Frequenzfilterausgangsignals wenigstens ein zweiter Varianzwert ermittelt. Aus diesen wenigstens zwei Varianzwerten (neue Varianz, alte Varianz) wird sodann mit Hilfe einer Rekursivberechnung das gewogene arithmetische Mittel dieser Varianzwerte berechnet. Sofern der gewogene arithmetische Mittelwert über einem vorgewählten Varianzschwellwert liegt, wird dies als ein Körperschallereignis gewertet, das durch einen mechanischen Schaden an dem Wälzlager verursacht wurde.

Der Begriff "Rekursivberechnung" bedeutet in diesem Zusammenhang, dass Ergebniswerte einer ersten Varianzberechnung in die Berechung eines zweiten Varianzwertes einbezogen werden. Dies ermöglicht eine konsistente Schätzung der Körperschallamplitude auf der Basis von nur zwei Abtastwerten, ohne dass zusätzliche Speicherkapazität in einer Auswerteeinrichtung vorgesehen sein muss.

Die Ermittlung des gewogenen arithmetischen Varianzmittelwertes erfolgt mit Hilfe der rekursiven Grundgleichung

$$\bar{E}\left\{X^2\right\}(k+1) = \bar{E}\left\{X^2\right\}(k) + C_x^2 \left[x^2(k+1) - \bar{E}\left\{X^2\right\}(k)\right] \qquad \text{(Gl. 1)},$$

bei der $\bar{E}\{.\}$ den Erwartungswert des gewogenen arithmetischen Mittelwertes, k die Laufvariable, x einen digitalen Abtastwert des Signals und C eine Adaptionskonstante darstellen.

Hinsichtlich der Adaptionskonstante C ist ein Wert vorgesehen, der kleiner als Eins und größer als Null ist und aus der Gleichung für die sogenannte Anpassungsgeschwindigkeit

$$t = \left\{1/C_x^2 - 1/2\right\} * T \qquad \text{(Gl. 2)}$$

berechenbar ist. Darin gibt t an, wie schnell mit einer tolerierbaren Fehlerquote die wahre Varianz ermittelbar ist.

Ausgehend von der rekursiven Grundgleichung (Gl.1) lässt sich eine Umwandlungsgleichung

$$nE = aE + aK * (nA - aE) \qquad \text{(Gl. 3)}$$

bilden, in der nE für einen neuen Ergebniswert, aE für einen alten Ergebniswert, aK für die Adaptionskonstante und nA für einen neuen Abtastwert steht. Der "neue Ergebniswert" ist dabei der momentan zu berechnende Wert, während der "alte Ergebniswert" den einen Abtasttakt früher berechneten Wert kennzeichnet.

Diese Umwandlungsgleichung lässt sich für den Auswertungsprozess in eine Auswertungsgleichung

$$nV = aV + aK * (nA - aV) \qquad \text{(Gl. 4)}$$

umformen, in der nV für die neue Varianz, aV für die alte Varianz, aK für die Adaptionskonstante und nA für den neuen Abtastwert steht.

Eine so errechnete neue Varianz wird als Schätzwert für die wahre Varianz des Messsignals bewertet, aus dem auf das Vorliegen von Körperschallereignissen in dem Wälzlager geschlossen wird. Dabei repräsentiert ein hoher neuer Varianzwert eine große Schädigung in dem Wälzlager.

Wie die obigen Ausführungen verdeutlichen, kann mit dem erfindungsgemäßen Verfahren aus dem Messsignal einer in einem Wälzlager angeordneten Messvorrichtung das Vorliegen von Körperschallwellen bzw. Körperschallereignissen mit einer Auswerteeinrichtung festgestellt werden, die über keinen großen Speicherplatz und über eine eher kleine Rechenkapazität verfügt. Derartige Auswerteeinrichtungen können Mikrocomputer sein, die direkt am Ort der Messsignalgewinnung beispielsweise in der Umfangsnut eines Wälzlagers angeordnet sind und die notwenigen Analyseschritte zur Feststellung von Lagerschäden vollziehen.

Darüber hinaus ermöglicht das erfindungsgemäße Verfahren, dass das Messsignal eines geeigneten Sensors, wie beispielsweise eines Dehnungsmessstreifens am Wälzlager derartig umgewandelt wird, dass besser als mit bisher bekannten Verfahren eine eindeutige Aussage über das tatsächliche Vorliegen von Lagerschäden möglich ist. Schließlich ermöglicht dieses Verfahren, dass mit nur wenigen Messwerten Körperschallwellen so schnell erkennbar sind, dass vorzugsweise "online", dass heißt ohne Zeitverzug, ein plötzlich auftretender Lagerschaden erfassbar ist.

## Kurze Beschreibung der Zeichnungen

Das erfindungsgemäße Verfahren, dessen Zusammenwirken mit einem Messwälzlager sowie einer Auswerteeinrichtung lässt sich am besten anhand von Ausführungsbeispielen der Erfindung erläutern, die in einer Zeichnung dargestellt sind. Darin zeigen

Figur 1    einen schematischen Querschnitt durch ein Messwälzlager,

Figur 2    eine Draufsicht auf eine Messanordnung in einer Umfangsnut des Messwälzlagers gemäß Figur 1,

Figur 3    eine elektrische Messbrückenschaltung der Messanordnung gemäß Figur 2,

Figur 4    ein Messsignalverlauf mit Frequenzanteilen, die auf einen Schaden im Wälzlager hinweisen,

Figur 5    zwei Messsignale nach dem Passieren eines Frequenzfilters, und

Figur 6    die Darstellung von Varianzmittelwerten der beiden Messsignale gemäß Figur 5.


**Ausführliche Beschreibung der Zeichnungen**

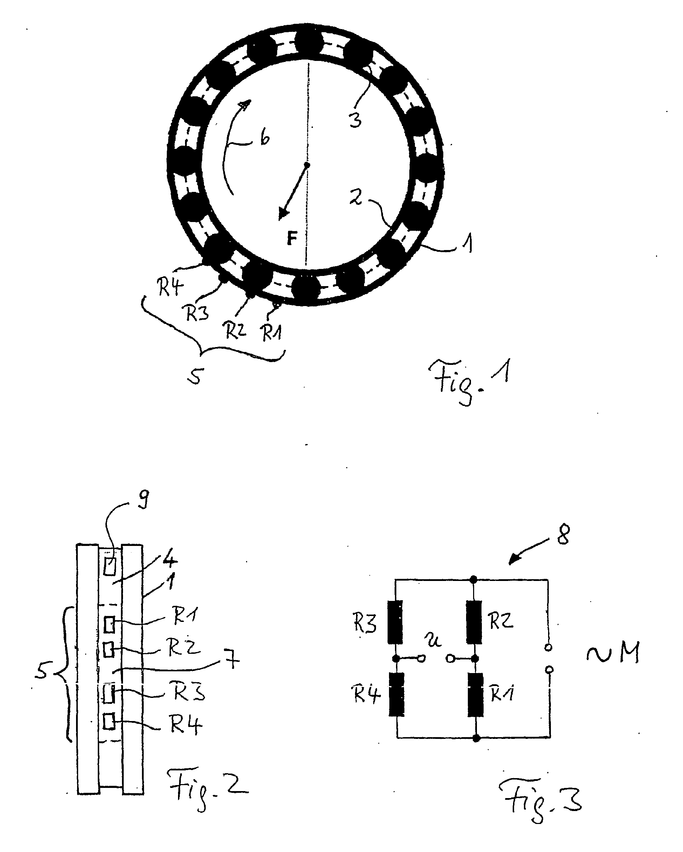

Figur 1 zeigt demnach eine schematische Querschnittsdarstellung eines Wälzlagers, bei dem zwischen einem feststehenden Außenring 1 und einem drehbaren Innenring 2 Wälzkörper 3 angeordnet sind, so dass der Innenring 2 beispielsweise in eine Richtung 6 verdrehbar gelagert ist. Dieser Innenring 2 dient zur Aufnahme eines hier nicht dargestellten Bauteils, welches auf den Innenring 2 eine Kraft F ausübt. Wie dieser Darstellung entnehmbar ist, wirkt die Kraft F über den Innenring 2 und die Wälzkörper 3 auf den Außenring 1, so dass die Wälzkörper 3 an ihren wandernden Kontaktstellen an dem Außenring 1 eine periodische Verformung erzeugen, die mit geeigneten Sensoren messbar sind.

An der Umfangsfläche des Außenringes 1 sind daher in einem Messbereich 5 Messwiderstände R1, R2, R3, R4 befestigt, die dehnungsabhängig ihren elektrischen Widerstand verändern und mit denen daher die Verformung des Außenringes 1 beim Überrollen eines jeden Messwiderstandes R1, R2, R3, R4 durch die Wälzkörper 3 feststellbar ist. Wichtig ist in diesem Zusammenhang aber, dass die Widerstände R1, R2, R3, R4 hinsichtlich ihres Abstandes zueinander nicht sonderlich ausgerichtet sein müssen.

Wie Figur 2 zeigt, sind die Messwiderstände R1, R2, R3, R4 in diesem Ausführungsbeispiel des Messwälzlagers in einer Umfangsnut 4 des Außenringes 1 in einem Befestigungsbereich 7 so angeordnet, dass diese achsparallel zur Bewegungsrichtung des Innenringes 1 positioniert sind. Die Widerstände R1, R2, R3, R4 sind dabei untereinander zu einer Messbrücke 8 verschaltet, deren Schaltschema in Figur 3 dargestellt ist. Diese Messbrücke 8 wird in an sich bekannter Weise mit einer Spannung U beaufschlagt und liefert über die Kontaktstellen ein weitgehend sinusförmiges Messsignal M. Dieses Messsignal M ist einer Auswerteeinrichtung 9, die in der Nut 4 des Lageraußenringes angebracht sein kann, über hier nicht dargestellte Leiterbahnen zuleitbar, in der eine Signalanalyse erfolgen kann.

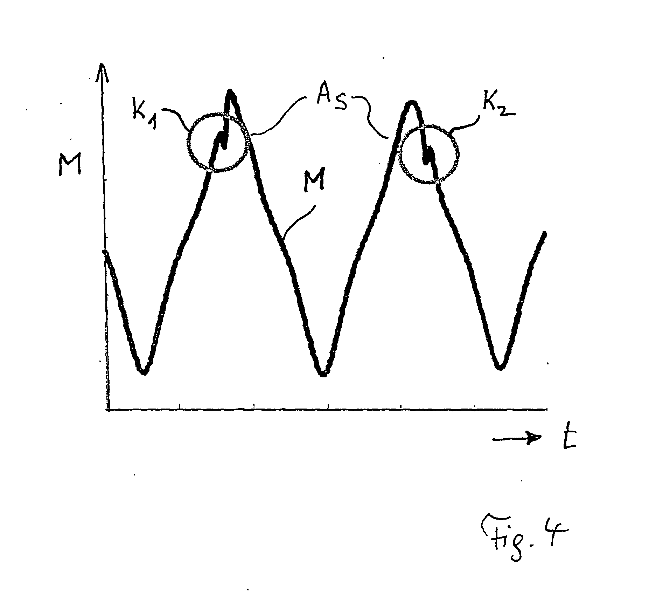

In Figur 4 ist der typische zeitliche Verlauf eines solchen Messsignals M dargestellt. Wie der Signalverlauf zeigt, ist dem sinusförmigen Grundsignal ein höher frequentes Signal überlagert, dass in dieser Abbildung mit den Kreisen $K_1$ und $K_2$ markiert ist. Der höher frequente Signalanteil ist für die Analyse des Messsignals M von besonderem Interesse, da dieser auf einen Schaden in dem Lager hinweist.

Leider ist bei solchen Messsignalen der Signalpegel des sinusförmigen Grundsignals M sehr viel größer als der des höher frequenten Signalanteils. Das Messsignal M bedarf daher einer gesonderten Auswertung, um das höher frequente Signal von dem Grundsignalanteil zu trennen und zweifelsfrei von einem immer vorhandenen und oft hinsichtlich seiner Amplitudenhöhe ähnlich großen Rauschsignals unterscheiden zu können. Dazu wird das Messsignal M der Messvorrichtung 8 zunächst einem Frequenzfilter zugeleitet, der die unerwünschten Frequenzanteile aus diesem Messsignal M entfernt. Ein solcher Frequenzfilter kann so ausgeführt sein, dass dieser das analoge oder aber bevorzugt das zuvor digitalisierte Messsignal entsprechend zuvor gewählter Voreinstellungen filtert und digitale Signale ausgibt.

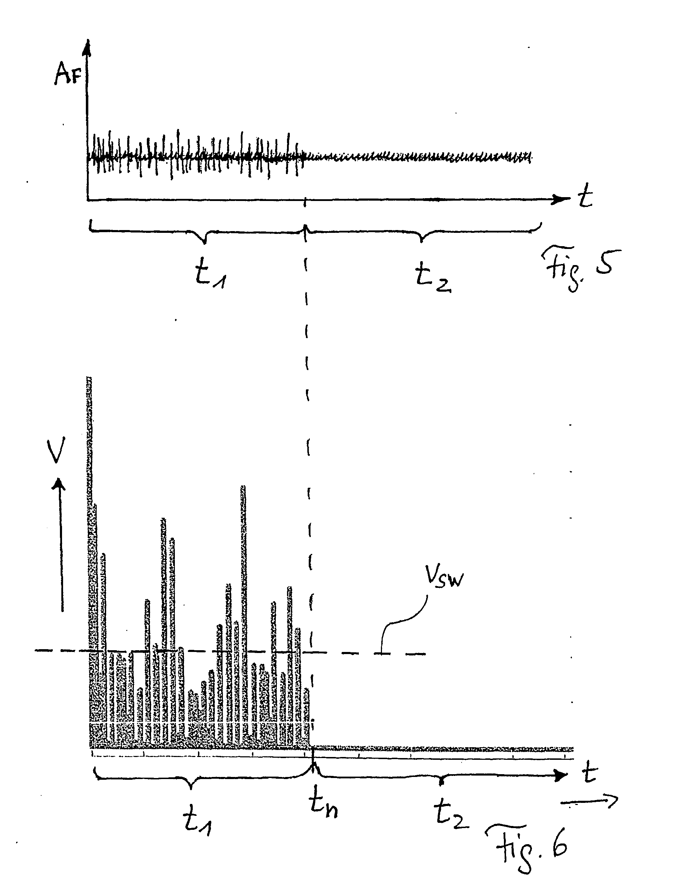

Figur 5 zeigt das Ergebnis einer solchen Frequenzfilterung. Dabei ist in einem linken Zeitraum $t_1$ ein gefiltertes Messsignal für ein schadhaftes Wälzlager und im rechten Zeitabschnitt $t_2$ ein gefiltertes Messsignal für schadloses Wälzlager dargestellt. Der Zeitpunkt $t_n$ markiert den Signaiwechsei von einem schadhaften zu einem schadlosen Wälzlager. Wie dieser Darstellung deutlich entnehmbar ist, wird durch die Frequenzfilterung des Messsignals bereits eine Verbesserung hinsichtlich der Erkennbarkeit der höher frequenten Signalanteile erreicht, jedoch ist das Verhältnis der Amplituden As des höher frequenten Messsignalanteils zu den Amplituden des Rauschsignals immer noch vergleichsweise gering. Dieser Rauschanteil ist in dem Zeitabschnitt $t_2$ genau der Signalverlauf, der auf ein schadloses Wälzlager hinweist, da das sinusförmige Grundsignal, das durch das Vorbeirollen der Wälzkörper 3 an der jeweiligen Messstelle 5 entstand, durch den Filtervorgang entfernt wurde.

Da dieser Rauschabstand sehr gering ist, liegt damit zunächst auch eine vergleichsweise schlechte Detektionsempfindlichkeit für die aufzuspürenden Lagerschäden vor. Hier schafft das erfindungsgemäße Auswerteverfahren nun Abhilfe, in dem durch dieses u.a. ein sehr viel größer Abstand zwischen dem Körperschallsignal und dem Rauschsignal geschaffen wird. Darüber hinaus kann mit nur sehr wenigen digitalen Messwerten eine eindeutige Aussage über das Vorliegen eines Lagerschadens getroffen werden.

Dazu ist erfindungsgemäß vorgesehen, dass aus Digitalwerten des Ausgangssignals des Frequenzfilters (Signalverlauf gemäß Fig. 5) zunächst ein erster Varianzwert errechnet wird, dass daran anschließend aus weiteren Digitalwerten des Frequenzfilterausgangsignals wenigstens ein zweiter Varianzwert ermittelt wird und dass aus diesen wenigstens zwei Varianzwerten (neue Varianz, alte Varianz) mit Hilfe einer Rekursivberechnung das gewogene arithmetische Mittel dieser Varianzwerte berechnet wird. Die Varianz stellt dabei bekanntermaßen das Quadrat der Standardabweichung dar, die wiederum angibt, wie Einzelmesswerte um einen Mittelwert streuen.

Da ein großer gewogener arithmetischer Varianzmittelwert bedeutet, dass der untersuchte Messsignalanteil stark von dem sinusförmigen Grundsignal bzw. dem Rauschsignal abweicht, kann dessen Überschreiten über einen vorbestimmten Varianzschwellwert $V_{SW}$ als ein Körperschallereignis gewertet werden, das durch einen mechanischen Schaden an dem Wälzlager verursacht wurde.

Figur 6 zeigt in anschaulicher Weise für ein schadhaftes Wälzlager im linken Diagrammabschnitt, wie ungewöhnlich groß in einem Zeitraum $t_1$ der Abstand der Varianzwerte V für dieses schadhafte Wälzlager von dem Varianzwert für ein schadloses Wälzlager in einem Zeitraum $t_2$ ist. Wie dieser Darstellung ebenfalls entnehmbar ist, kann das Überschreiten der errechneten Varianzwerte V gegenüber einem hier eingezeichneten Varianzschwellwert $V_{SW}$ eindeutig auf das Vorliegen von Körperschallereignissen und damit auf Schäden in dem Wälzlager hinweisen.

**Bezugszeichenliste**

| | |
|---|---|
| 1 | Außenring |
| 2 | Innenring |
| 3 | Wälzkörper |
| 4 | Nut |
| 5 | Messbereich |
| 6 | Drehrichtung |
| 7 | Befestigungsbereich |
| 8 | Messbrücke |
| 9 | Auswerteeinrichtung |
| As | Amplitude des Messsignals S |
| $A_F$ | Amplitude des Filtersignals |
| $K_1$ | Körperschallereignis |
| $K_2$ | Körperschallereignis |
| M | Messsignal |
| R1 | Elektrischer Widerstand |
| R2 | Elektrischer Widerstand |
| R3 | Elektrischer Widerstand |
| R4 | Elektrischer Widerstand |
| t | Zeit |
| $t_1$ | Zeitraum |
| $t_2$ | Zeitraum |
| $t_n$ | Zeitpunkt Messsignalwechsel |
| V | Varianz |
| $V_{SW}$ | Varianzschwellwert |

**Patentansprüche**

1. Verfahren zur Feststellung von Körperschallereignissen in einem Wälzlager, bei dem ein Messsignal (M) eines an einem Wälzlager angeordneten druck- oder dehnungsempfindlichen Sensors einem Frequenzfilter zum Herausfiltern von unerwünschten Signalanteilen zugeführt wird, **dadurch gekennzeichnet, dass** aus Digitalwerten des Frequenzfilterausgangsignals ein erster Varianzwert errechnet wird, dass aus weiteren Digitalwerten des Frequenzfilterausgangsignals wenigstens ein zweiter Varianzwert ermittelt wird, dass aus diesen wenigstens zwei Varianzwerten mit Hilfe einer Rekursivberechnung das gewogene arithmetische Mittel dieser Varianzwerte berechnet wird, und dass ein Überschreiten des gewogenen arithmetischen Varianzmittelwertes über einen vorgewählten Varianzschwellwert ($V_{SW}$) als ein Körperschallereignis gewertet wird, das durch einen mechanischen Schaden an dem Wälzlager verursacht wurde, dass die Frequenz für die Überschreitung der Schwelle bei Kenntnis der Drehzahl und den geometrischen Verhältnissen des Lagers eindeutig dem Entstehungsort des Schadens (Außenring, Innenring, Wälzkörper) zugeordnet werden kann.

2. Verfahren nach Anspruch 1, **dadurch gekennzeichnet, dass** gewogene arithmetische Mittel der Varianzwerte nach der rekursiven Grundgleichung

$$\bar{E}\{X^2\}(k+1) = \bar{E}\{X^2\}(k) + C_x^2 \, [x^2(k+1) - \bar{E}\{X^2\}(k)] \qquad (Gl.1)$$

berechnet wird, mit $\bar{E}\{.\}$ für den Erwartungswert des gewogenen arithmetischen Mittelwertes, mit k als Laufvariable, mit x als digitaler Abtastwert des Signals und C als Adaptionskonstante.

3. Verfahren nach Anspruch 2, **dadurch gekennzeichnet, dass** die Adaptionskonstante C einen Wert aufweist, der kleiner als Eins und größer als Null ist.

4. Verfahren nach Anspruch 3, **dadurch gekennzeichnet, dass** die Adaptionskonstante C aus der Gleichung für die Anpassungsgeschwindigkeit

$$t = \{ 1/C_x^2 - 1/2 \} * T \qquad (Gl.2)$$

berechenbar ist, wobei t angibt, wie schnell mit einer tolerierbaren Fehlerquote die wahre Varianz ermittelbar ist.

5. Verfahren nach wenigstens einem der vorherigen Ansprüche, **dadurch gekennzeichnet, dass** die rekursive Grundgleichung (Gl.1) in eine Umwandlungsgleichung

$$nE = aE + aK * (nA - aE) \qquad (Gl.3)$$

umgewandelt ist, in der nE für einen neuen Ergebniswert, aE für einen alten Ergebniswert, aK für die Adaptionskonstante und nA für einen neuen Abtastwert steht.

6. Verfahren nach Anspruch 5, **dadurch gekennzeichnet, dass** die Umwandlungsgleichung (Gl.3) in eine Auswertungsgleichung

$$nV = aV + aK * (nA - aV) \qquad (Gl.4)$$

mit nV für neue Varianz, aV für alte Varianz, aK für die Adaptionskonstante, nA für neuer Abtastwert umgeformt ist.

7. Verfahren nach Anspruch 6, **dadurch gekennzeichnet, dass** der Wert der neuen Varianz als Schätzwert für die wahre Varianz des Messsignals bewertet wird, der das Vorliegen von Körperschallereignissen in dem Wälzlager markiert.

8. Verfahren nach Anspruch 6 oder Anspruch 7, **dadurch gekennzeichnet, dass** ein hoher neuer Varianzwert eine hohe Wahrscheinlichkeit für das Vorliegen von Körperschallereignissen in dem Wälzlager repräsentiert.

9. Verfahren nach Anspruch 6 oder 7, **dadurch gekennzeichnet, dass** ein hoher neuer Varianzwert eine große Schädigung im Wälzlager repräsentiert.

**Claims**

1. Method for detection of structure-borne sound events in a roller bearing, in which a measurement signal (M) from a pressure-sensitive or strain-sensitive sensor which is arranged on a roller bearing is supplied to a frequency filter for filtering out undesirable signal components, **characterized in that** a first variance value is calculated from digital values of the frequency filter output signal, **in that** at least one second variance value is determined from further digital values of the frequency filter output signal, **in that** the weighted arithmetic mean of these variance values is calculated from these at least two variance values with the aid of a recursive calculation, and **in that** any exceeding of the weighted arithmetic variance mean value above a preselected variance threshold value ($V_{SW}$) is assessed as a structure-borne sound event which has been caused by mechanical damage to the roller bearing, **in that** the frequency for exceeding the threshold can be unambiguously associated with the point of origin of the damage (outer ring, inner ring, roller body) when the rotation speed and the geometric conditions are known.

2. Method according to Claim 1, **characterized in that** the weighted arithmetic mean of the variance values is calculated using the basic recursive equation:

$$\overline{E}\{X^2\}(k + 1) = \overline{E}\{X^2\}(k) + C_x^2\left[x^2(k + 1) - \overline{E}\{X^2\}(k)\right] \quad \text{(Equation 1)}$$

where $\overline{E}\{.\}$ represents the expected value of the weighted arithmetic mean value, k is a running variable, x is a digital sample value of the signal, and C is an adaptation constant.

3. Method according to Claim 2, **characterized in that** the adaptation constant C has a value which is less than unity and greater than zero.

4. Method according to Claim 3, **characterized in that** the adaptation constant C can be calculated from the equation for the adaptation rate

$$t = \left\{1 / C_x^2 - 1/2\right\} * T \quad \text{(Equation 2)}$$

where t indicates how quickly the true variance can be determined with a tolerable error rate.

5. Method according to at least one of the preceding claims, **characterized in that** the basic recursive equation (equation 1) is converted to a conversion equation

$$nE = aE + aK * (nA - aE) \quad \text{(Equation 3)}$$

in which nE represents a new result value, aE represents an old result value, aK represents the adaptation constant, and nA represents a new sample value.

6. Method according to Claim 5, **characterized in that** the conversion equation (equation 3) is converted to an evaluation equation

$$nV = aV + aK * (nA - aV) \quad \text{(Equation 4)}$$

where nV represents the new variance, aV represents the old variance, aK represents the adaptation constant, and nA represents a new sample value.

7. Method according to Claim 6, **characterized in that** the value of the new variance is assessed as an estimated value of the true variance of the measurement signal, which marks the presence of structure-borne sound events in the roller bearing.

8. Method according to Claim 6 or Claim 7, **characterized in that** a high new variance value represents a high probability of the presence of structure-borne sound events in the roller bearing.

9. Method according to Claim 6 or 7, **characterized in that** a high new variance value represents major damage in the roller bearing.

**Revendications**

1. Procédé de détection d'évènements acoustiques de structure dans un palier à rouleaux, dans lequel un signal de mesure (M) d'un capteur sensible à la pression ou à la dilatation, fixé sur un palier à rouleaux, est acheminé vers un filtre de fréquences pour filtrer les composantes indésirables du signal, **caractérisé en ce qu'**on calcule une première valeur de la variance à partir des valeurs numériques du signal de sortie du filtre de fréquences, **en ce qu'**on détermine au moins une deuxième valeur de la variance à partir d'autres valeurs numériques du signal de sortie du filtre de fréquences, **en ce qu'**à partir de ces deux valeurs au moins de la variance, on calcule la moyenne arithmétique pondérée de ces valeurs de la variance à l'aide d'un calcul récursif, et **en ce que** un dépassement par la valeur moyenne pondérée de la variance d'une valeur définie de seuil de la variance ($V_{sw}$) est jugé comme un évènement acoustique de structure qui a été causé par un dommage mécanique au palier à rouleaux, **en ce que** la fréquence pour le dépassement du seuil avec la connaissance de la vitesse de rotation et des rapports géométriques du palier peut être attribuée explicitement à l'emplacement à l'origine du dommage (anneau extérieur, anneau intérieur, corps des rouleaux).

2. Procédé selon la revendication 1, **caractérisé en ce qu'**on calcule la moyenne arithmétique pondérée de ces valeurs de la variance à l'aide d'une équation récursive de base,

$$\overline{E}\{X^2\}(k+1) = \overline{E}\{X^2\}(k) + C_x^2[x^2(k+1) - \overline{E}\{X^2\}(k)] \quad \text{Equ. 1}$$

avec $\overline{E}\{.\}$ pour la valeur attendue de la moyenne arithmétique pondérée, avec k comme variable de la course, avec x comme valeur numérique enregistrée du signal et C comme constante d'adaptation.

3. Procédé selon la revendication 2, **caractérisé en ce que** la constante d'adaptation C présente une valeur qui est inférieure à un et supérieure à zéro.

4. Procédé selon la revendication 3, **caractérisé en ce que** la constante d'adaptation C peut être calculée à partir de l'équation de la vitesse d'adaptation

$$t = \{1/C_x^2 - 1/2\} * T \quad \text{Equ. 2}$$

où t indique à quelle vitesse il est possible de déterminer la vraie variance avec un niveau d'erreur tolérable.

5. Procédé selon une au moins des revendications précédentes, **caractérisé en ce que** l'équation récursive de base Equ. 1 est transformée en une équation de transformation

$$nE = aE + aK * (nA - aE) \quad \text{Equ. 3}$$

où nE représente une nouvelle valeur du résultat, aE une ancienne valeur du résultat, aK la constante d'adaptation et nA une nouvelle valeur enregistrée.

6. Procédé selon la revendication 5, **caractérisé en ce que** l'équation de transformation Equ. 3 est changée en une équation de traitement

$$nV = aV + aK * (nA - aV) \quad \text{Equ. 4}$$

avec nV pour une nouvelle variance, aV pour une ancienne variance, aK pour la constante d'adaptation et nA une nouvelle valeur enregistrée.

7. Procédé selon la revendication 6, **caractérisé en ce que** la valeur de la nouvelle variance est jugée comme valeur estimée de la vraie variance du signal de mesure, qui marque l'existence d'évènements acoustiques de structure dans le palier à rouleaux.

8.  Procédé selon la revendication 6 ou la revendication 7, **caractérisé en ce qu'**une nouvelle valeur élevée de la variance représente une probabilité élevée de l'existence d'évènements acoustiques de structure dans le palier à rouleaux.

9.  Procédé selon la revendication 6 ou 7, **caractérisé en ce qu'**une nouvelle valeur élevée de la variance représente un dommage important dans le palier à rouleaux.

Fig. 1

Fig. 2

Fig. 3

Fig. 4

Fig. 5

Fig. 6